# EUROPEAN PATENT SPECIFICATION

(11) **EP 2 596 211 B1**
(45) Date of publication and mention of the grant of the patent: **11.03.2015**
(21) Application number: 10742447.5
(22) Date of filing: 22.07.2010
(51) Int. Cl.: F01B 23/10, F02B 63/04, F02B 71/04, H02K 7/18

(54) **ELECTRIC POWER GENERATOR AND MOTOR ASSEMBLY EQUIPPED THEREWITH**
STROMGENERATOR UND DAMIT AUSGERÜSTETE MOTORANORDNUNG
GÉNÉRATEUR D'ÉLECTRICITÉ ET GROUPE MOTEUR ÉQUIPÉ DE CELUI-CI

(43) Date of publication of application: 29.05.2013
(73) Proprietor: Petkanchin, Lachezar, 1527 Sofia (BG)
(72) Inventor: Petkanchin, Lachezar, 1527 Sofia (BG)
(74) Representative: Müller Schupfner & Partner Patent- und Rechtsanwaltspartnerschaft mbB
(86) International application number: PCT/EP2010/060642
(87) International publication number: WO 2012/010208

(56) References cited:
- EP-A1- 1 398 863
- WO-A1-02/40843
- WO-A1-2009/045521
- WO-A2-01/45977
- CN-A- 101 144 421
- GB-A- 2 219 671
- GB-A- 2 437 742
- KR-A- 20090 040 616
- US-A1- 2005 081 804

## Description

### Technical field

The present invention relates to a power generator and a motor assembly equipped with such an electric power generator. Furthermore, the invention relates to a method for generating electric energy as well as a method for operating an electric motor.

### Related art

There have been made continuous efforts to improve the efficiency in generating electric power, i. e. electric current, by generators. Furthermore, strong efforts have been made to improve the efficiency of all kinds of motors comprising an internal combustion engine having at least one piston.

The piston internal combustion engine has been around for well over a century. Although it has been improved a lot since it was invented it still remains quite inefficient. Detailed explorations show that around 70 % of the fuel chemical energy is lost as heat released to the environment. Energy loss depends to a great extend on working regime of the engine. Typical values are:
1. ∼45 % of the fuel energy is lost with hot exhaust gasses;
2. ∼20 % is lost through the engine cooling system (water and oil) and ambient heat exchange;
3. ∼10 % is lost due to friction in the engine.

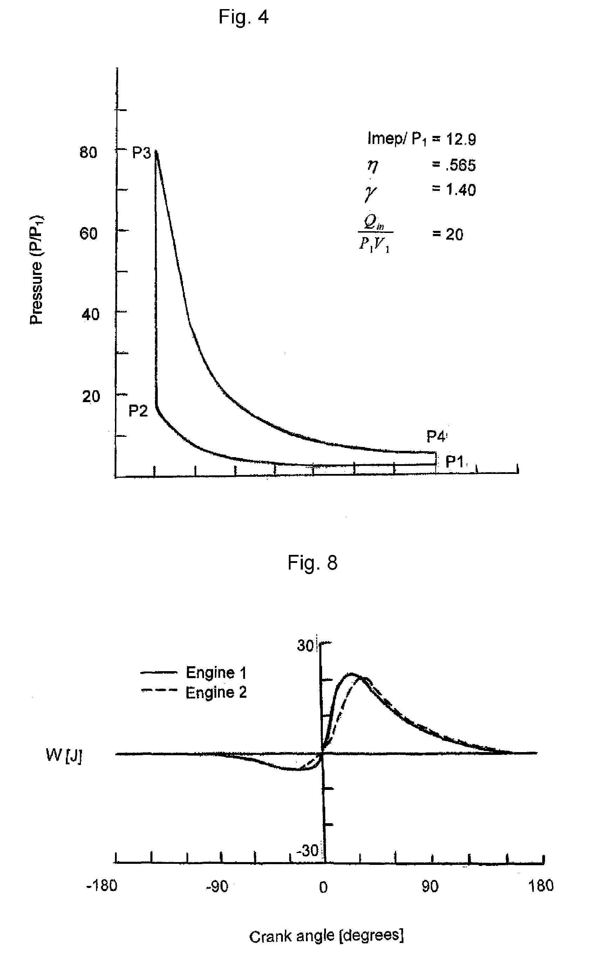

Lost energy through exhaust can be reduced if the expansion ratio of the engine is greater. However in the present day engine mechanics expansion ratio equals compression ratio, which cannot be increased too much because of the knock effect. Fig. 4 is P/V diagram work cycle of an internal combustion engine with compression ratio r=8. On the chart from P1 to P2 is the compression stage. At P2 a spark ignites the fuel leading to heat addition and pressure increase.

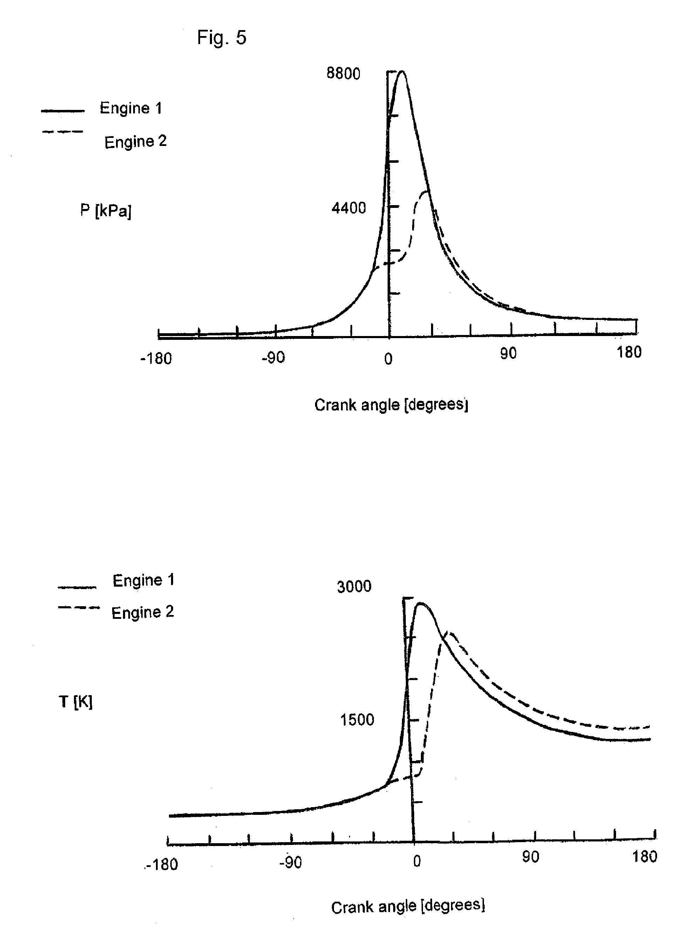

Work is done during expansion phase from P3 to P4. At P4 the exhaust valve opens and the pressure drops. In Fig. 5 a thermal and pressure diagram is shown, relative to the crank shaft angle during compression and work stages of the piston. It is visible that the temperature drops by about 50 %. From the law for ideal gas, the internal energy is PV=nRT. n and R are constant, T3=3000K and T4∼1630K=> the gas had lost ∼55 % of its energy , before the exhaust valve opened, thus thermal efficiency is ϕ∼55 %. The terms "Engine 1" and "Engine 2" refer to two different engine designs, of which engine 1 is closer to the present invention.

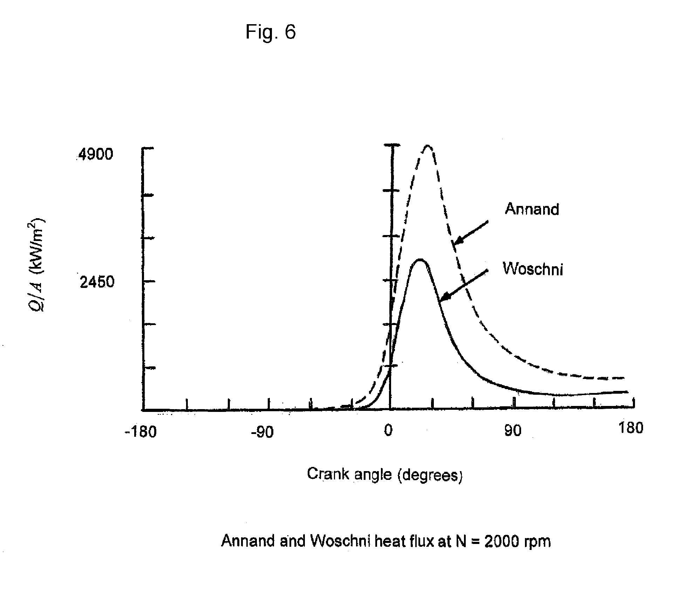

Regrettably of these ϕ∼55 % thermal efficiency energy, there are losses through heat transfer to the cylinder and the piston. In Fig. 6 the rate of heat flux, relative to the crank shaft angle, is shown. The two curves shown were measured by the engineers Ann and an Woschni, respectively.

The heat flux is maximum after the heat addition (burning of fuel in the cylinder), when both temperature and pressure are high. The heat flux leads to cooling of the gas => pressure drops => the gas does less work on the piston. The transferred heat is mostly carried away by the cooling system. Part of it is directly released to the environment from the hot engine (ambient loss).

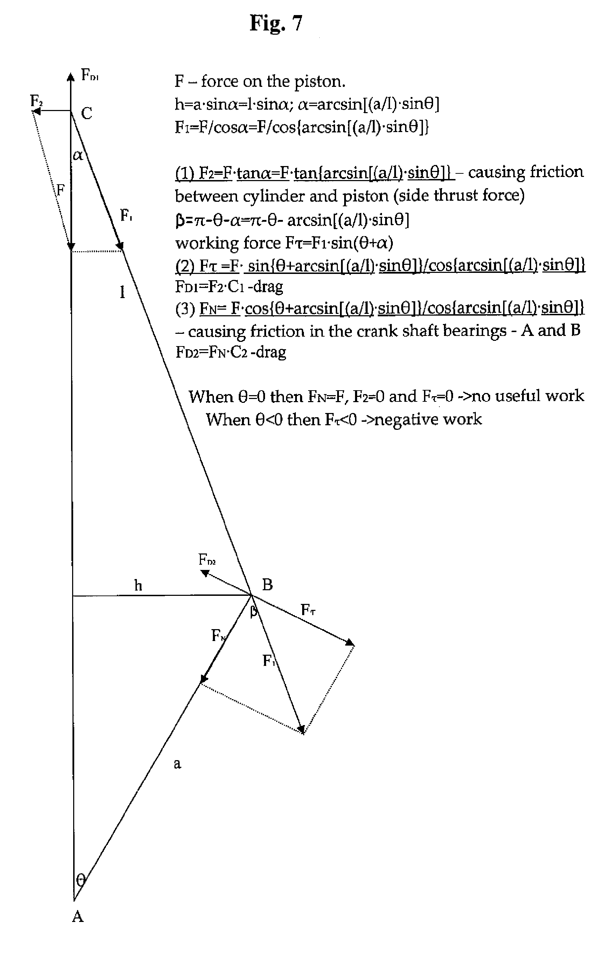

Another drain of useful energy is the internal friction. In Fig. 7 the piston is attached to the push rod I in point C. Expanding gas applies force F, which spreads as F₁, acting in the direction of the push rod, and F₂, pressing the piston to the cylinder to the left. F₂ creates a drag force F_{D1}=F₂·C₁, where friction coefficient C₁ > 0. The friction coefficient depends inter alia on the thickness of the lubricant film in the cylinder. From the equation (1) one can see that if I→∞ then F₂→0 and hence drag force F_{D1}=F₂·C₁→0. However, in practice the length of I is limited.

Push rod L is attached to the crank shaft in point B and applies the same force F₁ to it. On its turn F₁ spreads in F_{T} - tangential to the crank shaft - and F_{N} - normal to the crank shaft. At any moment during the work cycle of the engine F_{T} is the force which does useful work. It equals F₁ when β=π/2 and F_{T}=0 when θ=0.

The other component F_{N} does not do useful work. On the contrary, it increases friction in the bearing B (push rod and crank shaft) and A (crank shaft bearings). Again, there is a drag force F_{D2}=F_{N}·C₂, C₂>0.

In total, friction amounts to about 10 % loss of energy. In present day hybrid vehicles usually there is a pretty much standard internal combustion engine, moving a generator to turn fuel chemical energy into electricity. Though this engine runs at optimum load, its efficiency is not more than 30 %, because fundamental reasons for energy loss, described above, still apply.

The WO 2009/045521 A1 relates to an electromagnetic engine including a piston, slidably disposed in a cylinder with a closed end and a converter operable with the piston to convert mechanical energy of the first piston from and to electrical energy within a piston cycle.

The EP 1 398 863 A1 describes a free piston device with electrically driven linear actuator, comprising a linearly moveable piston device, a runner connected to the piston and a stator. The piston is driven by the effect of a medium which expands in an expansion chamber. The device has a first displacement chamber in which the piston on which the medium acts is moveable. It also has a second displacement chamber in which the associated runner is movable.

The US 2005/0081804 A1 describes a free-piston device with electric linear drive, comprising at least one piston receptacle with at least one piston device arranged for linear displacement in the piston receptacle, the piston device comprising a traveller device, and a stator device being arranged on the piston receptacle, and the at least one piston device being drivable under the action of a medium which expands in an expansion space, wherein the dead centers of the displacement of the piston device are definable.

Document KR 10 2009 004 0616 A discloses a linear generator system, comprising a linear generator and two free-piston engines installed on each side of the linear generator, wherein an intake port of each free-piston engine is connected to a chamber of the opposite side of the linear generator, for ventilating air into the combustion chamber of the free-piston engine.

The WO 01/45977 A2 refers to a device for generating electric energy, which includes a combustion engine with a piston, which is mechanically freely movable in a housing, further comprising an electromagnetic energy transducer and an external current circuit, which is connected to the energy transducer for exchange of effect in a direction to or from the energy transducer.

Document GB 2 437 742 A describes a free piston gas engine, comprising a piston reciprocating in a combustion cylinder, a control unit and a linear generator for generating of electrical energy, which for instance can be conveyed to a battery via the control unit.

Document GB 2 219 671 A relates to a hybrid engine employing a reciprocating piston carrying a magnet cooperating with fixed windings of yoke to generate electrical power and a computer, controlling the effective impendences of windings and currents through windings to control the motion of the magnet and hence of the piston.

The WO 02/40843 A1 relates to a two-stroke engine comprising two pistons, which are coupled together and a shaft, which connects said pistons and supports a linear generator, wherein the shaft is equipped with magnetic bearings and contactless seals to avoid losses due to friction processes.

The CN 101144421 A discloses a nested type internal combustion-linear power generation system with a four-stroke internal combustion engine, a linear motor, a reversible energy storage element and an electronic control unit, improving the power density, the energy conversion, the transmission efficiency and the control-lability of the internal combustion-linear power generation system.

It is an object of the present invention to provide an electric power generator, a motor assembly, a method for generating electric energy and a method for operating an electric motor with improved efficiency.

### Description of the invention

This object is achieved with an electric power generator according to claim 1, a motor assembly according to claim 13, a method for generating electric energy according to claim 14, and a method for operating an electric motor according to claim 15, respectively. Advantageous embodiments of the invention are the subject-matter of the dependent claims.

According to the invention, an electric power generator comprises: an internal combustion engine having a piston, a linear electric generator for generating electric current, comprising a linearly movable part which is connected with the piston and which consequently is moved by the piston, and a stationary part which is in other words not moved by the piston. Furthermore, the electric power generator according to the invention comprises an energy storing device in which the energy which is generated by the linear electric generator by moving the linearly moving part relative to the stationary part during the work cycle of the piston may be stored and which is adapted for applying of at least a portion of the stored energy to the linear electric generator in such a way that the piston - which during its work cycle has moved to its lower dead center - can be moved towards the upper dead center, which is done during the exhaust-refresh cycle of the piston. Generally, an internal combustion engine of the two-stroke type as well as of the four-stroke type may be used in the present invention. As is apparent from the previous description, the term "internal combustion engine" is not intended to include also a fly wheel which is in certain instances considered to be part of the internal combustion engine. As is clear from the term "linear" in connection with "electric generator" comprising a linearly movable part, such a generator does not include rotating magnets or coils, but refers to an assembly wherein one part or portion of the generator is linearly moved with respect to the stationary or fixed part or portion of the generator.

An electric power generator according to the invention does not have the problem of the friction of a rotating fly wheel and crank shaft due to the absence thereof. In addition, there is no side thrust on the piston at any moment. From equations on Fig. 7, it can easily be deducted that at any given moment F_{N}>0 or F₂>0. Both these forces create friction leading to energy waste. On the contrary, according to the invention, no fraction of the force F is transformed into friction. Thus, the total friction occurring in the internal combustion engine is reduced.

As deducted from equations in Fig. 7, the real working force in a prior art internal combustion engine, pushing the crank shaft tangentially is FT=F·sin{θ+arcsin[(a/l)·sinθ]}/cos{arcsin[(a/l)·sinθ]}. When θ=0 or θ=π, F_{T} =0 holds. In other words, useful work output is zero as depicted in Fig. 8. This fact is also evident from Fig. 8. However, from Fig. 5 it can be seen that when θ→0, both temperature and pressure are high. In spite of that, useful work output is zero, as depicted in Fig. 8. As the gas inside the cylinder is not allowed to expand quickly and make work around the moment when θ→0, there is a lot heat transfer to cylinder walls, instead of useful work, which is depicted in Fig. 6. This amount of wasted energy is taken away by the cooling system and released to the environment. Also undesired endothermic reactions take place creating toxic NOₓ gases.

As opposed thereto, according to the present invention, there is no mechanical limitation to allow the hot pressured gas to quickly expand after heat release at TDC. As there is no crank shaft, the piston can accelerate freely downwards straight away. At any given moment work will be F·ds, where s is the distance covered by the piston. As the hot gas is allowed to expand faster, compared to standard internal combustion engine, the temperature and pressure will also drop proportionally faster (PV=nRT) and because of this, there will be less time for intense heat flux to cylinder walls to take place and for undesired NOₓ gases to form. Saved energy due to less heat transfer during the work cycle will be converted to useful work instead.

According to a preferred embodiment of the invention, the energy storing device is an accumulator and is connected with the stationary part of the linear electric generator. This means in other words that energy recovered from the accumulator and applied to the linear electric generator in the form of an electric current, generates a magnetic field which can move the linearly movable part in the direction of the upper dead center of the piston. As an alternative, the energy storing device could be a mechanical device such as a coil spring, a compressible gas cylinder or any other suitable energy storing means.

It may be advantageous that the stationary part comprises a coil assembly and that the linearly movable part is a permanent magnet, which can be moved through or along the coil assembly or outside thereof. This means in other words that the permanent magnet can be moved in the interior of the space defined by the coil assembly. It is clear that as an alternative the stationary part could be a permanent magnet, whereas the movable part could be a coil assembly. In this instance the coil assembly would have to be coupled to the energy storing device in a capacitive or inductive manner, whereas the coil assembly as a stationary portion can be easily connected to the energy storing device via cables. A further alternative is that both the stationary part and the linearly movable part are coil assemblies. For instance, a moving part containing at least one coil with a core can be used to generate a permanent magnetic filed, thus replacing a permanent magnet. This has the advantage of a better temperature stability while permanent magnets may degrade under extreme heat.

It may be advantageous for a better control of the energizing of the coil assembly when the coil assembly comprises two or more coils which are arranged parallel to each other, i.e. in a serial fashion along the same axis.

It is preferred that at the piston a first end of a rod is rigidly attached and at the movable part a second end of the rod is rigidly attached. "Rigidly" means that the attachment is carried out in a fixed manner without pivots or joints being provided which might allow a rotational or pivotal movement of the movable part which might deviate from the linear translation thereof. Consequently, the fact that there is no side thrust on the piston at any moment is thereby further emphasized.

According to a preferred embodiment of the electric power generator of the invention, the top dead center or upper dead center of the internal combustion engine in the work cycle may be different from the upper dead center thereof in the exhaust-refresh cycle. Alternatively or additionally, also the bottom dead center of the internal combustion engine may differ in the work cycle from that in the exhaust-refresh cycle. It is further preferable that the upper dead center and/or the bottom dead center are adjustable during working of the internal combustion engine.

It is preferred that the expansion ratio and/or the compression ratio of the internal combustion engine can be adjusted or adapted during the operation of the internal combustion engine. There is the possibility to operate with much greater expansion ratio, compared to compression ratio, because bottom dead center (BDC) in work cycle can be lower than BDC in suction cycle. Hence, there is less heat lost in the exhaust gases.

In addition, there is the possibility to temporarily stop the piston at BDC and top dead center (TDC). Hence, there is less negative work immediately after spark ignition and pressure drop of exhaust gas before exhaust cycle. Furthermore, TDC at the end of compression cycle can be different (lower) from TDC at the end of exhaust cycle. This results in less residual fraction in the cylinder after exhaust cycle and yields a better volumetric efficiency.

According the invention, the internal combustion engine is a two-stroke or two-cycle engine comprising a first cylinder - having a first piston - and a second cylinder - having a second piston - working in a joint stroke cycle in such a manner that, when the first cylinder performs its work cycle or work stroke, the second cylinder performs its exhaust-refresh cycle or stroke. It is further preferred that in such an electric power generator the first piston of the first cylinder during its work cycle pushes air from the external side of the first piston to the compression area of the second cylinder during its exhaust-refresh cycle, whereby the second cylinder can be ventilated from exhaust gases. In a particular arrangement of such an electric power generator, the first piston and in particular its external side moves in a first chamber of the first cylinder - which is not the combustion chamber, but outside thereof - and the first chamber has a fresh air supply valve and an opening which is connected with an intake valve (for fresh air) of the second cylinder by a first tube. It is self-evident that both cylinders may be formed in an equal manner so that they ventilate each other. In other words, preferably also the second piston and in particular its external side moves in a second chamber of the second cylinder and the second chamber has a fresh air supply valve and an opening which is connected with an intake valve of the first cylinder by a second tube.

It is advantageous that an electric power generator of the invention is provided with a controller which is connected with the energy storing device and the linear electric generator and is adapted for controlling the storing of electric energy in the energy storing device on the one hand and for recovering electric energy from the energy storing device and applying it to an electric load on the other hand. According to this embodiment, an electric load may be supplied with a constant current or a current with a predetermined amplitude and frequency curve which may be shaped and controlled by the controller.

The object underlying the invention is also achieved by a motor assembly which comprises an electric power generator as described previously. The motor assembly further comprises an electric motor and a controller which is connected with the energy storing device, the linear electric generator and the electric motor. The controller is adapted such that electric energy can be stored in the energy storing device on the one side and electric energy can be recovered from the energy storing device and applied to the electric motor on the other side. In this manner, the electric motor - which may be a motor having rotating magnets or a linear motor, for example - may be supplied with a drive current of any desirable frequency and amplitude. Such a motor assembly has the same advantages as the electric power generator described above.

A further object of the present invention is a method for generating electric energy according to claim 14. Such a method is suitable and adapted for operating the electric power generator discussed above and comprises the following steps: an internal combustion engine having a piston as well as a linear electric generator for generating an electric current are both operated, wherein the latter comprises a linearly movable part which is connected with the piston, and a stationary part. The electric current is generated by moving the linearly movable part relative to the stationary part, this movement being driven by the piston during the work cycle thereof. As a further step, at least a part of the energy generated by the linear electric generator is stored in an energy storing device, and at least a part of the energy stored in the energy storing device is recovered therefrom and applied to the stationary part in order to generate a force which is sufficiently strong to move the piston back towards the upper dead center thereof during the exhaust-refresh cycle of the piston. Carrying out this method of the invention provides similar advantages as described in connection with the electric power generator and are, thereof, not repeated for sake of conciseness.

A further object of the present invention is a method for operating an electric motor according to claim 15. This method comprises on the one hand all the steps as described in connection with the previous method. On the other side, it has to be specified that one part of the energy generated by the linear electric generator is transformed into suitable frequency and amplitude by a controller and then supplied to the electric motor (which occurs during the work cycle of the piston), while the rest of the energy generated by the linear electric generator is rectified and then stored in the energy storing device. Furthermore, during the exhaust-refresh cycle of the piston energy is recovered from the energy storing device, transformed into suitable frequency and amplitude and applied to the electric motor in order to keep it in motion, and on the other hand a portion of the energy supplied to the stationary part in order to generate a force which is sufficient for moving the piston back towards the upper dead center thereof, whereby the energy generation cycle of the internal combustion engine may be carried out once again. Thus, the controller acts as an equivalent of a gear box, which has an unlimited number of gear levels and can shift - just to give an example - 1,000 times per second. In a similar way, preferably energy supplied to the energy storing device is first converted to a DC current. One part of the energy drawn from the energy storing device is then converted to a proper AC current as a supply to the electric motor, and another part of the energy is converted to an AC current (usually having a different shape) as a supply for the linear electric generator in order to perform the non-working cycles of the internal combustion engine.

It has to be clarified that the electric power generator and the motor assembly on the one hand and the two methods on the other hand are related to each other and that features for examples described in connection with the methods are also intended to be applicable to the electric power generator and the motor assembly, respectively, and vice versa.

Further features and particularities of the invention are evident in from the following description of preferred, but not limiting embodiments of the invention in connection with the schematic drawings which are not necessarily to scale.

### Short description of the drawings

- Fig. 1: shows a schematic view of a first embodiment of a motor assembly which could be part of the current invention,
- Fig 2: shows an embodiment of an internal combustion engine suitable for a second embodiment of a power generator of the invention in a first state,
- Fig. 3: shows the internal combustion engine of Fig. 2 in a second state,
- Fig. 4: shows a P/V diagram of an internal combustion engine according to the prior art,
- Fig. 5: shows a thermal and pressure diagram relative to the crank shaft angle during compression and work stages of the piston of a prior art internal combustion engine, respectively,
- Fig. 6: shows a diagram of the rate of heat flux relative to the crank shaft angle of a prior art internal combustion engine,
- Fig. 7: shows a sketch of the geometrical relations in a prior art internal combustion engine, and
- Fig. 8: shows a diagram of the useful work output depending on the crank angle of a prior art internal combustion engine.

### Detailed description of advantageous embodiments

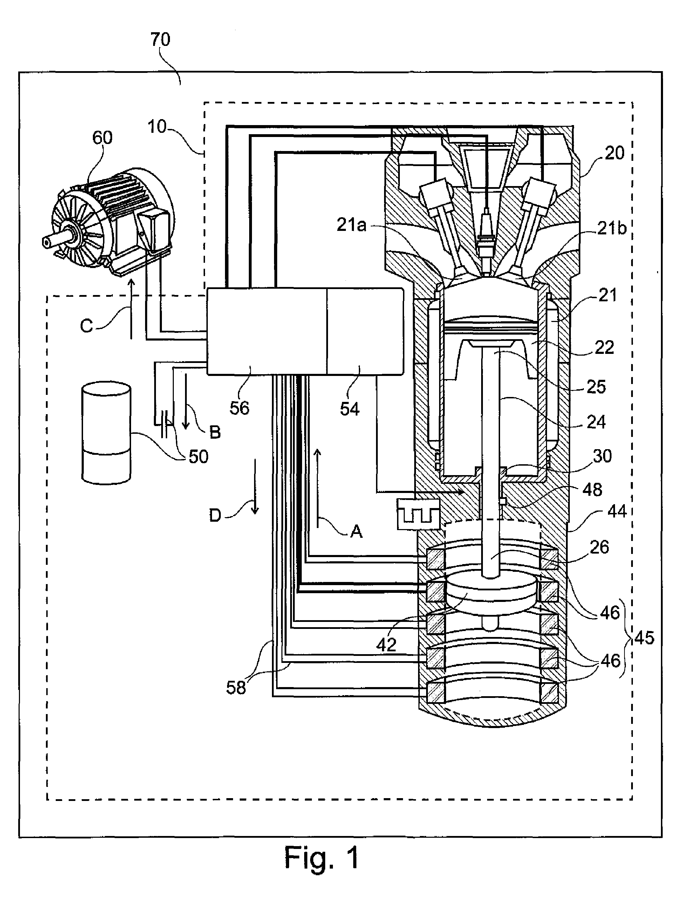

Fig. 1 shows a motor assembly 70, which could be part of the current invention, comprising an electric motor 60 and an electric power generator 10 which includes a controller 54. The electric motor 60 may be of any suitable type, for example of the type comprising rotating magnets or linearly moving magnets.

The electric power generator 10 according to the first embodiment comprises an internal combustion engine 20 having inter alia one piston 22 in a cylinder 21. As an example it may be assumed that the internal combustion engine is of a 4-stroke type. However, the invention is not limited hereto. Using this internal combustion engine 20, one can make energy from fuel released as heat in the cylinder 21 with the piston 22 within an intake valve 21 a and an exhaust valve 21 b, similar to a standard internal combustion engine. The piston 22 is rigidly connected with a first end 25 of a rod 24. In other words, the rod 24 is fixedly connected with the piston 22 and does not allow any rotating movement relative thereto. The key difference between the internal combustion engine 20 relative to this invention with respect to a standard internal combustion engine, however, is that the push rod 24 does not rotate a crank shaft and a fly wheel. That is, instead of a crank shaft and a fly wheel, at the second end 26 of the rod 24 a linear electric generator 40 is directly and rigidly attached. The rod 24 is guided and supported by a bearing 30.

The linear electric generator 40 comprises a coil assembly 45 which itself in this example includes five ring-shaped coils 46, and a permanent magnet 42. Thus, the coil assembly 45 is a portion of the stationary part 44 of the linear electric generator 40, whereas the permanent magnet 42 is the linearly movable part. When the permanent magnet 42 is pushed along the ring-shaped coils 46, an electric current is induced in the coils 46. By the way, the work cycle of the internal combustion engine 20 can be stroke 2 or stroke 4, similar to the cycles in a standard internal combustion engine. In other words, in the electric power generator 10 of the invention, the crank shaft and fly wheel known from the prior art engines are replaced by an electric equivalent of the linear electric generator 40. When the piston 22 is pushed down by hot gas in the cylinder 21 during the work cycle, it drives the permanent magnet 42 via the push rod 24 through the ring-shaped coils 46, thereby inducing electric voltage in the coils 46. In this manner, an electric current is generated, which flows along the arrow A along cables 58 to a controller 54. The controller 54 controls a switch unit 56 in order to let the induced electric current pass (as indicated by an arrow B) to the energy storing device 50, which is represented by a capacitor on the one side and at the same time by a container on the other side. The controller 54 commands switching units 56 how much electric current to draw from every individual coil 46. When electric current is drawn from a coil 46, it induces an opposing magnetic field to the field of the permanent magnet 42, thus generating a negative force on the permanent magnet 42. This is the way how work, created by expanding gas in the cylinder 21, is transformed into electric energy. The greater the current drawn from the coils 46 is, the greater the breaking force on the permanent magnet will be. By commanding which amount of current to draw from every coil 46, the controller 54 can control the breaking force and ultimately the speed of the permanent magnet 42, the rod 24 and the piston 22.

A sensor or encoder 48 is provided in the vicinity of the rod 24 in order to provide the controller 54 with the exact position of the piston 22. When the piston 22 approaches the bottom dead center, this fact is indicated to the controller 54 by the sensor 48. Then controller 54 commands the switch unit 56 to increase the current drawn from the coils 46, which occurs in the vicinity of the bottom dead center. Consequently, the negative force increases and the piston 22 is gradually brought to a standstill.

During the work cycle of the piston 22, the harvest of electric energy on the one hand is used to run the electric motor 60, whereas the part of it not used is stored in the energy storing device 50. Electric energy in the energy storing device 50 is then used to supply the electric motor 60 (as indicated by an arrow C) and the linear electric generator 40 (as indicated by an arrow D) - which in this phase works as a linear electric motor - during non-work cycles of the internal combustion engine 20. In other words, the electric current in the coils 46 induces a magnetic field and resulting forces that draw the permanent magnet 42 and the piston 22 connected to it towards the upper dead center of the piston 22. The linear electric generator 40 and the energy storing device 50, therefore, act as an electric equivalent to the fly wheel in a standard internal combustion engine. At the end of the work cycle, the controller 54 electrically opens the electro-magnetic exhaust valve 21 b. After the bottom dead center is reached, the linear electric generator 40 works as a linear motor. The controller 54 commands the switch unit 56 to draw an electric current from the energy storing device and provides current along arrow D through the coils 46 starting from bottom to top, thus inducing a wave of magnetic field which pushes the permanent magnet 42 upwards, forcing the exhaust gas out of the cylinder 21 until the piston 22 reaches the top dead center. In a similar fashion during intake, the intake valve 21 a is electrically opened, and coils 46 from top to bottom are energized pushing the permanent magnet 42 down. In this phase, atmospheric pressure forces fresh air to flow inside the cylinder 21, namely the combustion chamber thereof. Combustion is similar to exhaust, however, both valves 21 a and 21 b are closed, and the coils 46 are energized with a greater current in order to create a greater electric magnetic force to compress the air inside the cylinder 21.

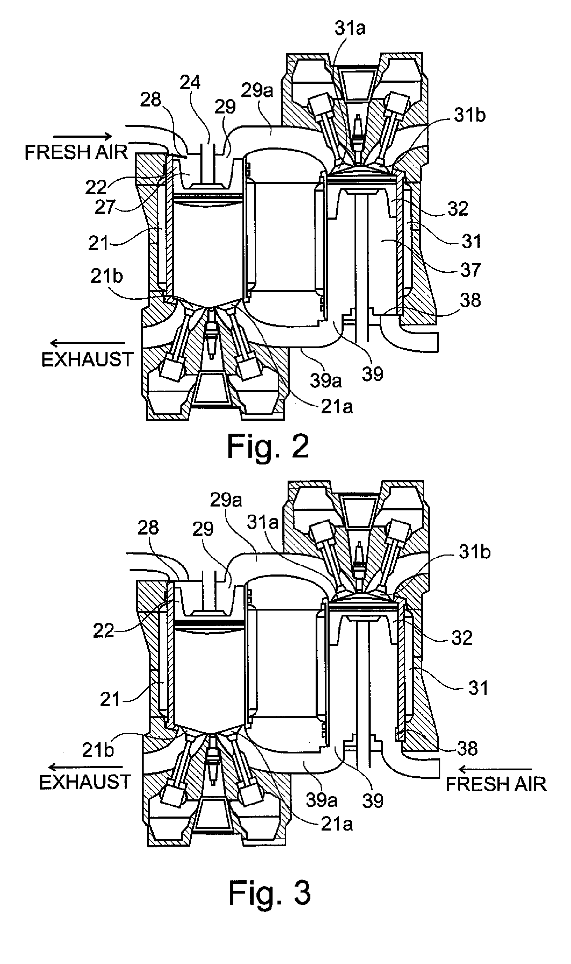

Fig. 2 and Fig 3 show a further embodiment of the invention, which is a 2-stroke internal combustion engine 20. The first cylinder 21 with a first piston 22 and the second cylinder 31 with a second piston 32 are arranged in anti-parallel arrangement, whereas in Fig. 2 the first, left cylinder 21 is shown to be in the intake/exhaust cycle, the second right cylinder 31 is shown to be in the work cycle. In Fig. 3, however, the first cylinder 21 in shown to be in the exhaust cycle, whereas the second cylinder is shown to be in the compression cycle.

In order to avoid unnecessary repetitions, only the arrangement of the first cylinder 21 is described, and the description of the second cylinder 31 - which has the same construction - is omitted.

The piston 22 moves in a first chamber 27 provided in the first cylinder 21. The first chamber 27 may be closed by a first valve 28 which serves for providing the first chamber 27 with fresh air. When the piston 22 starts to move from bottom to top, the first valve 28 is closed and consequently the fresh air is pressed through an opening 29 provided in the first chamber 27 and then through a respective tube 29a connected to the opening 29 and guided to an intake valve 31 a of the second cylinder 31. In a similar manner, also the fresh air in a second chamber 37 of the second cylinder 31 may be pressed trough an opening 39, closable by a second valve 38, and through a tube 39a in an intake valve 21 a of the first cylinder 21. In both cylinders 21, 31, the exhaust gas may leave the cylinders via the exhaust valves 21 b and 31 b, respectively.

By this arrangement, one cylinder ventilates the other cylinder with fresh air and helps to expel the exhaust gases. In this manner, no separate pump for expelling the exhaust gases and/or providing fresh air is needed.

It is self-evident that the invention is not restricted to the embodiments illustrated and described previously. For example, there may be several adjustments and modifications in the configuration of the internal combustion engine 20 and the linear electric generator 40 with respect to the constructive design of individual parts. Furthermore, it should be noted that the features of the invention which were described with respect to individual embodiments may well be present with other embodiments unless indicated otherwise or evident because of technical reasons.

### List of reference numerals

- 10: electric power generator
- 20: internal combustion engine
- 21: first cylinder
- 21a: intake valve
- 21b: exhaust valve
- 22: first piston
- 23: external side
- 24: rod
- 25: first end
- 26: second end
- 27: first chamber
- 28: first valve
- 29: opening
- 29a: tube
- 30: bearing
- 31: second cylinder
- 31a: intake valve
- 31b: exhaust valve
- 32: second piston
- 37: second chamber
- 38: second valve
- 39: opening
- 39a: tube
- 40: linear electric generator
- 42: permanent magnet/movable part
- 44: stationary part
- 45: coil assembly
- 46: coil
- 48: sensor
- 50: energy storing device
- 54: controller
- 56: switch unit
- 58: cables
- 60: electric motor
- 70: motor assembly
- A: arrow
- B: arrow
- C: arrow
- D: arrow

## Claims

1. An electric power generator (10), comprising:
an internal combustion engine (20) having a piston (22),
a linear electric generator (40) for generating an electric current, comprising a linearly movable part (42) which is connected with the piston (22), and a stationary part (44), and
an energy storing device (50) for storing the energy which is generated by the linear electric generator (40) by moving the linearly movable part (42) relative to the stationary part (44) during the work cycle of the piston (22), the energy storing device (50) being adapted for applying at least a part of the stored energy to the linear electric generator (40) such that the piston (22) is movable back towards the upper dead center thereof during the exhaust-refresh cycle of the piston (22), wherein the internal combustion engine (20) comprises a first cylinder (21) and a second cylinder (31) arranged in anti-parallel arrangement.

2. The electric power generator (10) according to claim 1, wherein
the energy storing device (50) is an accumulator and is connected with the stationary part (44) of the linear electric generator (40).

3. The electric power generator (10) according to claim 1 or 2, wherein
the stationary part (44) comprises a coil assembly (45) and the linearly movable part (42) is a permanent magnet movable through the coil assembly (45).

4. The electric power generator (10) according to claim 3, wherein
the coil assembly (45) comprises at least two coils (46) arranged serially to each other.

5. The electric power generator (10) according to any one of the preceding claims, wherein
at the piston (22) a first end (25) of a rod (24) is rigidly attached and at the movable part (42) a second end (26) of the rod (24) is rigidly attached.

6. The electric power generator (10) according to any one of the preceding claims, wherein
the upper dead center and/or the bottom dead center of the internal combustion engine (20) in the work cycle may be different from the upper dead center and/or the bottom dead center, respectively, in the exhaust-refresh cycle.

7. The electric power generator (10) according to claim 6, wherein
the upper dead center and/or the bottom dead center are adjustable during working.

8. The electric power generator (10) according to any one of the preceding claims, wherein
the expansion ratio and/or the compression ratio of the internal combustion engine (20) are variable during operation thereof.

9. The electric power generator (10) according to any one of the preceding claims, wherein
the internal combustion engine (20) is a two-stroke engine comprising the first cylinder (21) and the second cylinder (31) working in joint stroke cycle such that, when the first cylinder (21) makes its work cycle, the second cylinder (31) makes its exhaust-refresh cycle.

10. The electric power generator (10) according to claim 9, wherein
the arrangement is such that the piston (22) of the first cylinder (21) in the work cycle thereof pushes air from the external side (23) of the piston (22) to the compression area of the second cylinder (31) during the exhaust-refresh cycle thereof, thereby ventilating the second cylinder (31) from exhaust gases.

11. The electric power generator (10) according to claim 10, wherein
the external side (23) of the piston (22) is movable in a first chamber (27) of the first cylinder (21), wherein the first chamber (27) has a valve (28) for the supply with fresh air and an opening (29) connected with an intake valve (31a) of the second cylinder (31) by a tube (29a).

12. The electric power generator (10) according according to any one of the preceding claims, further comprising
a controller (54) connected with the energy storing device (50) and the linear electric generator (40), for controlling the storing of electric energy in the energy storing device (50) as well as for recovering electric energy therefrom and applying it to an electric load.

13. A motor assembly (70), comprising
an electric power generator (10) according to any one of the claims 1 - 12, an electric motor (60), and
a controller (54) connected with the energy storing device (50), the linear electric generator (40) and the electric motor (60), for controlling the storing of electric energy in the energy storing device (50) as well as for recovering electric energy therefrom and applying it to the electric motor (60).

14. A method for generating electric energy, comprising the following steps:
- operating an internal combustion engine (20) having a piston (22) and operating a linear electric generator (40) for generating an electric current, comprising a linearly movable part (42) which is connected with the piston (22), and a stationary part (44), such that electric current is generated by moving the linearly movable part (42) relative to the stationary part (44) during the work cycle of the piston (22), wherein the internal combustion engine (20) comprises a first cylinder (21) and a second cylinder (31) arranged in anti-parallel arrangement,
- storing energy generated by the linear electric generator (40) in an energy storing device (50), and
recovering energy from the energy storing device (50) and applying it to the stationary part (44) for generating the force necessary for moving the piston (22) back towards the upper dead center thereof during the exhaust-refresh cycle of the piston (22).

15. A method for operating an electric motor (60), comprising
- the steps of claim 14, wherein
- one part of the energy generated by the linear electric generator (40) is transformed into suitable frequency and amplitude and then supplied to the electric motor (60) during the work cycle of the piston (22), while the rest of the energy generated by the linear electric generator (40) is stored in the energy storing device (50), and
- during the exhaust-refresh cycle of the piston (22), energy is recovered from the energy storing device (50) for maintaining the electric motor (60) in motion and for applying it to the stationary part (44) for generating the force necessary for moving the piston (22) back towards the upper dead center thereof.

## Patentansprüche

1. Stromgenerator (10), umfassend:
einen Verbrennungsmotor (20) mit einem Kolben (22),
einen linearen elektrischen Generator (40) für die Erzeugung eines elektrischen Stromes, umfassend ein linear bewegliches Teil (42), welches mit dem Kolben (42) verbunden ist, und ein feststehendes Teil (44), und
eine Energiespeichervorrichtung (50) zum Speichern der von dem linearen elektrischen Generator (40) erzeugten Energie durch Bewegen des linear beweglichen Teils (42) im Verhältnis zu dem feststehenden Teil (44) während des Arbeitszyklus des Kolbens (22), wobei die Energiespeichervorrichtung (50) ausgelegt ist, wenigstens einen Teil der gespeicherten Energie auf den linearen elektrischen Generator (40) derart anzuwenden, dass der Kolben (22) während des Abgas-Ausstoß- und Ansaug-Zyklus des Kolbens (22) zu seinem oberen Totpunkt zurück bewegbar ist, wobei der Verbrennungsmotor (20) einen ersten Zylinder (21) und einen zweiten Zylinder (31) umfasst, welche in anti-paralleler Anordnung angeordnet sind.

2. Stromgenerator (10) nach Anspruch 1, wobei
die Energiespeichervorrichtung (50) ein Akkumulator ist und mit dem feststehenden Teil (44) des linearen elektrischen Generators (40) verbunden ist.

3. Stromgenerator (10) nach Anspruch 1 oder 2, wobei
der feststehende Teil (44) eine Spulengruppe (45) umfasst, und der linear bewegliche Teil (42) ein Dauermagnet ist, welcher durch die Spulengruppe (45) beweglich ist.

4. Stromgenerator (10) nach Anspruch 3, wobei
die Spulengruppe (45) wenigstens zwei Spulen (46) umfasst, welche seriell zueinander angeordnet sind.

5. Stromgenerator (10) nach einem der vorhergehenden Ansprüche, wobei
am Kolben (22) ein erstes Ende (25) einer Stange (24) starr angebracht ist, und am beweglichen Teil (42) ein zweites Ende (26) der Stange (24) starr angebracht ist.

6. Stromgenerator (10) nach einem der vorhergehenden Ansprüche, wobei
der obere Totpunkt und/oder der untere Totpunkt des Verbrennungsmotors (20) im Arbeitszyklus sich vom oberen Totpunkt und/oder vom unteren Totpunkt im Abgas-Ausstoß- und Ansaug-Zyklus unterscheiden kann.

7. Stromgenerator (10) nach Anspruch 6, wobei
der obere Totpunkt und/oder der untere Totpunkt während des Arbeitens einstellbar sind.

8. Stromgenerator (10) nach einem der vorhergehenden Ansprüche, wobei
das Expansionsverhältnis und/oder das Kompressionsverhältnis des Verbrennungsmotors (20) während des Betriebs desselben veränderbar sind.

9. Stromgenerator (10) nach einem der vorhergehenden Ansprüche, wobei
der Verbrennungsmotor (20) ein Zweitaktmotor ist, umfassend den ersten Zylinder (21) und den zweiten Zylinder (31), welche in einem gemeinsamen Taktzyklus arbeiten derart, dass der zweite Zylinder (31) seinen Abgas-Ausstoß- und Ansaug-Zyklus hat, wenn der erste Zylinder (21) seinen Arbeitszyklus hat.

10. Stromgenerator (10) nach Anspruch 9, wobei
die Anordnung derart ist, dass der Kolben (22) des ersten Zylinders (21) im Arbeitszyklus desselben Luft von der Außenseite (23) des Kolbens (22) zum Kompressionsbereich des zweiten Zylinders (31) während des Abgas-Ausstoß- und Ansaug-Zyklus desselben drückt, wodurch der zweite Zylinder (31) von Abgasen entlüftet wird.

11. Stromgenerator (10) nach Anspruch 10, wobei
die Außenseite (23) des Kolbens (22) in einer ersten Kammer (27) des ersten Zylinders (21) beweglich ist, wobei die erste Kammer (27) ein Ventil (28) für die Zufuhr von Frischluft und eine mit einem Einlassventil (31 a) des zweiten Zylinders (31) mittels eines Rohrs (29a) verbundene Öffnung (29) aufweist.

12. Stromgenerator (10) nach einem der vorhergehenden Ansprüche, weiter umfassend
einen mit der Energiespeichervorrichtung (50) und dem linearen elektrischen Generator (40) verbundenen Controller (54) zum Steuern des Speicherns von elektrischer Energie in der Energiespeichervorrichtung (50) sowie für die Rückgewinnung elektrischer Energie daraus und für die Anwendung der elektrischen Energie auf einen elektrischen Verbraucher.

13. Motorgruppe (70), umfassend
einen Stromgenerator (10) nach einem der Ansprüche 1-12,
einen Elektromotor (60), und
einen Controller (54), welcher mit der Energiespeichervorrichtung (50), dem linearen elektrischen Generator (40) und dem Elektromotor (60) verbunden ist für die Steuerung des Speicherns elektrischer Energie in der Energiespeichervorrichtung (50) sowie für die Rückgewinnung von elektrischer Energie daraus und ihre Anwendung auf den Elektromotor (60).

14. Verfahren zur Erzeugung elektrischer Energie, umfassend die folgenden Schritte:
- Betreiben eines Verbrennungsmotors (20) mit einem Kolben (22) und Betreiben eines linearen elektrischen Generators (40) zur Erzeugung eines elektrischen Stromes, umfassend ein linear bewegliches Teil (42), welches mit dem Kolben (22) verbunden ist, und ein feststehendes Teil (44) derart, dass elektrischer Strom durch Bewegen des linear beweglichen Teils (42) im Verhältnis zu dem feststehenden Teil (44) während des Arbeitszyklus des Kolbens (22) erzeugt wird, wobei der Verbrennungsmotor (20) einen ersten Zylinder (21) und einen zweiten Zylinder (31), welche in antiparalleler Anordnung angeordnet sind, umfasst,
- Speichern von von dem linearen elektrischen Generator (40) erzeugter Energie in einer Energiespeichervorrichtung (50), und
- Rückgewinnen von Energie von der Energiespeichervorrichtung (50) und Anwenden dieser Energie auf den feststehenden Teil (44) zum Erzeugen der Kraft, welche erforderlich ist, um den Kolben (22) während des Abgas-Ausstoß- und Ansaug-Zyklus des Kolbens (22) zurück seinem oberen Totpunkt zu bewegen.

15. Verfahren zum Betreiben eines Elektromotors (60), umfassend:
- die Schritte von Anspruch 14, wobei
- ein Teil der von dem linearen elektrischen Generator (40) erzeugten Energie in eine geeignete Frequenz und Amplitude umgewandelt wird und dann dem Elektromotor (60) während des Arbeitszyklus des Kolbens (22) zugeführt wird, während der Rest der von dem linearen elektrischen Generator (40) erzeugten Energie in der Energiespeichervorrichtung gespeichert wird, und
während des Abgas-Ausstoß- und Ansaug-Zyklus des Kolbens (22) wird Energie von der Energiespeichervorrichtung (50) rückgewonnen, um den Elektromotor (60) in Bewegung zu halten und diese Energie auf den feststehenden Teil (44) anzuwenden, um die Kraft zu erzeugen, welche notwendig ist, um den Kolben (22) zurück seinem oberen Totpunkt zu bewegen.

## Revendications

1. Générateur de puissance électrique (10), comprenant :
un moteur à combustion interne (20) ayant un piston (22),
un générateur électrique linéaire (40) pour générer un courant électrique, comprenant une partie linéairement mobile (42) qui est connectée avec le piston (22) et une partie stationnaire (44), et
un dispositif de stockage d'énergie (50) pour stocker l'énergie qui est générée par le générateur électrique linéaire (40) en déplaçant la partie linéairement mobile (42) par rapport à la partie stationnaire (44) pendant le cycle de travail du piston (22), le dispositif de stockage d'énergie (50) étant adapté pour appliquer au moins une partie de l'énergie stockée au générateur électrique linéaire (40) de sorte que le piston (22) est déplaçable en retour vers son point mort haut pendant le cycle d'échappement/rafraîchissement du piston (22), dans lequel le moteur à combustion interne (20) comprend un premier cylindre (21) et un second cylindre (31) agencés dans un agencement anti-parallèle.

2. Générateur de puissance électrique (10) selon la revendication 1, dans lequel le dispositif de stockage d'énergie (50) est un accumulateur et est connecté à la partie stationnaire (44) du générateur électrique linéaire (40).

3. Générateur de puissance électrique (10) selon la revendication 1 ou 2, dans lequel la partie stationnaire (44) comprend un ensemble à bobine (45) et la partie linéairement mobile (42) est un aimant permanent déplaçable à travers l'ensemble à bobine (45).

4. Générateur de puissance électrique (10) selon la revendication 3, dans lequel l'ensemble à bobine (45) comprend au moins deux bobines (46) agencées en série l'une par rapport à l'autre.

5. Générateur de puissance électrique (10) selon l'une quelconque des revendications précédentes, dans lequel
une première extrémité (25) d'une tige (24) est attachée rigidement sur le piston (22), et une seconde extrémité (26) de la tige (24) est attachée rigidement sur la partie mobile (42).

6. Générateur de puissance électrique (10) selon l'une quelconque des revendications précédentes,
dans lequel le point mort haut et/ou le point mort bas du moteur à combustion interne (20) dans le cycle de travail peuvent être différents du point mort haut et/ou du point mort bas, respectivement, dans le cycle d'échappement/rafraîchissement.

7. Générateur de puissance électrique (10) selon la revendication 6, dans lequel
le point mort haut et/ou le point mort bas sont ajustables pendant le fonctionnement.

8. Générateur de puissance électrique (10) selon l'une quelconque des revendications précédentes, dans lequel
le rapport d'expansion et/ou le rapport de compression du moteur à combustion interne (20) sont variables pendant le fonctionnement de celui-ci.

9. Générateur de puissance électrique (10) selon l'une quelconque des revendications précédentes, dans lequel
le moteur à combustion interne (20) est un moteur deux-temps comprenant le premier cylindre (21) et le second cylindre (31) fonctionnant dans un cycle à temps joints de telle façon que quand le premier cylindre (21) effectue son temps de travail le second cylindre (31) effectue son temps d'échappement/rafraîchissement.

10. Générateur de puissance électrique (10) selon la revendication 9, dans lequel
l'agencement est tel que le piston (22) du premier cylindre (21) dans le temps de travail de celui-ci pousse de l'air depuis le côté externe (23) du piston (22) vers la zone de compression du second cylindre (31) pendant le temps d'échappement/rafraîchissement de celui-ci, assurant ainsi une ventilation des gaz d'échappement du second cylindre (31).

11. Générateur de puissance électrique (10) selon la revendication 10, dans lequel
le côté externe (23) du piston (22) est déplaçable dans une première chambre (27) du premier cylindre (21), et dans lequel la première chambre (27) comprend une valve (28) pour l'alimentation avec de l'air frais et une ouverture (29) connectée à une soupape d'admission (31 a) du second cylindre (31) par un tube (29a).

12. Générateur de puissance électrique (10) selon l'une quelconque des revendications précédentes, comprenant en outre
un contrôleur (54) connecté au dispositif de stockage d'énergie (50) et au générateur électrique linéaire (40), afin de commander le stockage d'énergie électrique dans le dispositif de stockage d'énergie (50) ainsi que de récupérer l'énergie électrique de celui-ci et l'appliquer à une charge électrique.

13. Groupe moteur (70), comprenant
un générateur de puissance électrique (10) selon l'une quelconque des revendications 1 à 12,
un moteur électrique (60), et
un contrôleur (54) connecté au dispositif de stockage d'énergie (50), au générateur électrique linéaire (40) et au moteur électrique (60), afin de commander le stockage d'énergie électrique dans le dispositif de stockage d'énergie (50) ainsi que de récupérer l'énergie électrique de celui-ci et l'appliquer au moteur électrique (60).

14. Procédé pour générer de l'énergie électrique, comprenant les étapes suivantes :
- on fait fonctionner un moteur à combustion interne (20) ayant un piston (22) et on fait fonctionner un générateur électrique linéaire (40) pour générer un courant électrique, comprenant une partie linéairement mobile (42) qui est connectée au piston (22), et une partie stationnaire (44), de sorte qu'un courant électrique est généré en déplaçant la partie linéairement mobile (42) par rapport à la partie stationnaire (44) pendant le cycle de travail du piston (22), dans lequel le moteur à combustion interne (20) comprend un premier cylindre (21) et un second cylindre (31) agencés dans un agencement anti-parallèle,
- stocker l'énergie générer par le générateur électrique linéaire (40) dans un dispositif de stockage d'énergie (50), et
- récupérer de l'énergie depuis le dispositif de stockage d'énergie (50) et l'appliquer à la partie stationnaire (44) pour générer la force nécessaire pour déplacer le piston (22) en retour vers le point mort haut de celui-ci pendant le cycle d'échappement/rafraîchissement du piston (22).

15. Procédé pour le fonctionnement d'un moteur électrique (60), comprenant
- les étapes de la revendication 14, dans lesquelles
- une partie de l'énergie générée par le générateur électrique linéaire (40) est transformée vers une fréquence et une amplitude appropriées et ensuite alimentée au moteur électrique (60) pendant le cycle de travail du piston (22), alors que le reste de l'énergie générée par le générateur électrique linéaire (40) est stockée dans le dispositif de stockage d'énergie, et
- pendant le cycle d'échappement/rafraîchissement du piston (22), de l'énergie est récupérée depuis le dispositif de stockage d'énergie (50) pour maintenir le moteur électrique (60) en mouvement est pour l'appliquer à la partie stationnaire (44) afin de générer la force nécessaire pour déplacer le piston (22) en retour vers le point mort haut de celui-ci.
